# EUROPÄISCHE PATENTSCHRIFT

(11) **EP 4 439 219 B1**
(45) Veröffentlichungstag und Bekanntmachung des Hinweises auf die Patenterteilung: **29.04.2026**
(21) Anmeldenummer: 23166162.0
(22) Anmeldetag: 31.03.2023
(51) Int. Cl.: G05D 1/243, G05D 1/244, G05D 1/648, A01D 34/00

(54) **VERFAHREN UND OUTDOORBEARBEITUNGSSYSTEM ZUM BETREIBEN EINES AUTONOMEN MOBILEN OUTDOORBEARBEITUNGSROBOTERS AUF EINER ZU BEARBEITENDEN BODENFLÄCHE**
METHOD AND OUTDOOR PROCESSING SYSTEM FOR OPERATING AN AUTONOMOUS MOBILE OUTDOOR PROCESSING ROBOT ON A GROUND AREA TO BE PROCESSED
PROCÉDÉ ET SYSTÈME DE TRAITEMENT EXTÉRIEUR POUR FAIRE FONCTIONNER UN ROBOT DE TRAITEMENT EXTÉRIEUR MOBILE AUTONOME SUR UNE SURFACE DE SOL DEVANT ÊTRE USINÉE

(43) Veröffentlichungstag der Anmeldung: 02.10.2024
(73) Patentinhaber: Andreas Stihl AG & Co. KG, 71336 Waiblingen (DE)
(72) Erfinder: STROHMAIER, Andreas, 71554 Weissach im Tal (DE)
(74) Vertreter: Patentanwälte Ruff, Wilhelm, Beier, Dauster & Partner mbB

(56) Entgegenhaltungen:
- EP-A1- 3 167 700
- EP-B1- 3 412 133
- WO-A1-2021/183018
- DE-A1- 102022 104 749

## Beschreibung

### ANWENDUNGSGEBIET UND STAND DER TECHNIK

Die Erfindung bezieht sich auf ein Verfahren und ein Outdoorbearbeitungssystem jeweils zum Betreiben eines autonomen mobilen Outdoorbearbeitungsroboters auf einer zu bearbeitenden Bodenfläche.

Die WO 2021/183018 A1 offenbart ein Roboter-Arbeitswerkzeugsystem mit einer Begrenzung, die einen Arbeitsbereich umschließt, und einem Roboter-Arbeitswerkzeug, das einen Näherungssensor umfasst, der ein Hindernis erkennt. Das Roboter-Arbeitswerkzeug kann innerhalb des Arbeitsbereichs betrieben werden kann und ist so konfiguriert, dass es ein erkanntes Hindernis ermittelt, eine Distanz ermittelt, feststellt, ob die Distanz innerhalb einer Schwellendistanz liegt, und, falls dies der Fall ist, den Näherungssensor ignoriert, und, falls nicht, ein Ausweichmanöver durchführt, um das erkannte Hindernis zu vermeiden.

Die DE 10 2022 104749 A1 offenbart ein robotisches Gartenwerkzeug, das einen Satz von Rädern und Mittel zur Selbstnavigation über eine zu bearbeitende Fläche umfasst. Um zu vermeiden, dass das robotische Gartenwerkzeug in Pfützen ertrinkt, die sich bei starkem Regen in dem zu bearbeitenden Bereich bilden, sind ein elektrischer Sensor zum Aufzeichnen einer elektrischen Eigenschaft der Oberfläche unter dem robotischen Gartenwerkzeug und ein Detektor vorgesehen, der so konfiguriert ist, dass er auf der Grundlage der elektrischen Eigenschaft einen Zustand bestimmt, in dem das robotische Gartenwerkzeug in eine Wasserpfütze eintritt. Eine Steuereinheit des robotischen Gartenwerkzeugs ist so konfiguriert, dass sie ein Pfützenvermeidungsmanöver einleiten, wenn ein solcher Zustand erkannt wird.

Die EP 3 412 133 B1 offenbart ein Bodenbearbeitungssystem aus mindestens einem selbstfahrenden Bodenbearbeitungsgerät, wobei ein Arbeitsbereich des Bodenbearbeitungsgerätes durch eine Randbegrenzung bestimmt ist, die durch einen Begrenzungsdraht gebildet ist, und das Bodenbearbeitungsgerät ausgebildet ist, innerhalb des Arbeitsbereichs selbstständig einen Fahrweg zu fahren, wobei das Bodenbearbeitungsgerät einen Antrieb, eine Steuereinheit und einen bordeigenen Akku zur Energieversorgung des Bodenbearbeitungsgerätes aufweist, und mit mindestens einer Ladestation zum Aufladen des Akkus des Bodenbearbeitungsgerätes, wobei das Bodenbearbeitungsgerät ausgebildet ist, die Ladestation zum Aufladen des Akkus anzufahren. Eine Ladestation ist ohne Unterbrechung des Begrenzungsdrahtes der Randbegrenzung auf den Begrenzungsdraht aufgestellt. Der Begrenzungsdraht ist im Bereich der Ladestation unterbrechungsfrei weitergeführt.

### AUFGABE UND LÖSUNG

Der Erfindung liegt als Aufgabe die Bereitstellung eines Verfahrens und eines Outdoorbearbeitungssystems jeweils zum Betreiben eines autonomen mobilen Outdoorbearbeitungsroboters auf einer zu bearbeitenden Bodenfläche zugrunde, das verbesserte Eigenschaften aufweist, insbesondere nutzerfreundlicher ist.

Die Erfindung löst diese Aufgabe durch die Bereitstellung eines Verfahrens und eines Outdoorbearbeitungssystems beschrieben in den unabhängigen Ansprüchen. Vorteilhafte Weiterbildungen und/oder Ausgestaltungen der Erfindung sind in den abhängigen Ansprüchen beschrieben.

Das erfindungsgemäße Verfahren ist zum Betreiben eines autonomen mobilen Outdoorbearbeitungsroboters auf einer zu bearbeitenden Bodenfläche. Mindestens ein Randabschnitt eines Begrenzungsrands der Bodenfläche ist durch einen erkennbaren Wechsel einer Bodeneigenschaft der Bodenfläche definiert. Ein Begrenzungsleitersignal erzeugt mittels einer Begrenzungsleitereinrichtung ist mindestens an dem Randabschnitt erfassbar. Der Outdoorbearbeitungsroboter weist mindestens einen Erkennungssensor, insbesondere zwei Erkennungssensoren, einer Erkennungseinrichtung und mindestens einen Erfassungssensor einer Erfassungseinrichtung auf. Die Erkennungseinrichtung ist zum Erkennen, insbesondere eines Werts, der Bodeneigenschaft in einem Erkennungsbereich der Erkennungseinrichtung ausgebildet. Die Erfassungseinrichtung ist zum Erfassen, insbesondere eines Werts, des Begrenzungsleitersignals zum Überwachen mindestens einer Annäherung an die Begrenzungsleitereinrichtung, insbesondere einer Überquerung der Begrenzungsleitereinrichtung, ausgebildet. Das Verfahren weist die Schritte auf: a) Steuern eines Bewegens des Outdoorbearbeitungsroboters auf der Bodenfläche und Überwachen mindestens der Annäherung an die Begrenzungsleitereinrichtung mittels des Erfassens des Begrenzungsleitersignals, insbesondere mittels der Erfassungseinrichtung, während des Bewegens. b) im Fall mindestens der Annäherung an die Begrenzungsleitereinrichtung, insbesondere überwacht mittels der Erfassungseinrichtung, Steuern des Bewegens des Outdoorbearbeitungsroboters in Abhängigkeit des Erkennens des Wechsels, insbesondere mittels der Erkennungseinrichtung, derart, dass der Outdoorbearbeitungsroboter innerhalb des Begrenzungsrands bleibt, insbesondere auf der Bodenfläche.

Dies ermöglicht, dass die Begrenzungsleitereinrichtung ungenau bzw. grob an dem Randabschnitt angeordnet bzw. verlegt sein kann, und insbesondere nicht genau bzw. fein an dem Randabschnitt angeordnet sein braucht. Zusätzlich oder alternativ ermöglicht dies, dass der Randabschnitt nicht eingelernt sein braucht, insbesondere für ein Bestimmen einer Position des Outdoorbearbeitungsroboters auf der Bodenfläche. Somit ermöglicht dies einen geringen Installationsaufwand. Somit ermöglicht dies eine Nutzerfreundlichkeit.

Insbesondere können/kann das Verfahren, das Betreiben, das Erkennen, das Erfassen, das Überwachen, das Steuern und/oder das Bewegen automatisch und/oder computerimplementiert sein.

Autonomer mobiler Outdoorbearbeitungsroboter kann bedeuten, dass der Outdoorbearbeitungsroboter dazu ausgebildet sein kann, sich automatisch bzw. selbstständig bzw. selbstgesteuert und/oder unabhängig von einem Nutzer auf der Bodenfläche zu bewegen und/oder automatisch bzw. selbstständig bzw. selbstgesteuert und/oder unabhängig von dem Nutzer die Bodenfläche zu bearbeiten, insbesondere das Bearbeiten bzw. die Bearbeitung zu beginnen und/oder zu beenden.

Der Outdoorbearbeitungsroboter kann ein Bearbeitungswerkzeug aufweisen, insbesondere ein Schneidwerkzeug, wobei das Bearbeitungswerkzeug zu der Bearbeitung der Bodenfläche ausgebildet sein kann.

Der Outdoorbearbeitungsroboter kann ein Grünflächenbearbeitungsroboter sein.

Die Bodenfläche kann eine Grünfläche sein, insbesondere eine Gras- bzw. Rasenfläche. Insbesondere kann der Randabschnitt ein Rasenrandabschnitt sein.

Der Begriff "Änderung" kann für den Begriff "Wechsel" synonym verwendet werden.

Der Wechsel kann räumlich und/oder ein Ende sein.

Das Begrenzungsleitersignal kann physikalisch, insbesondere ein Feld, und/oder abstandsabhängig, insbesondere abfallend, sein.

Der Begriff "verursacht" kann für den Begriff "erzeugt" synonym verwendet werden.

Die Begrenzungsleitereinrichtung kann einen Begrenzungsdraht aufweisen, insbesondere eine Drahtschleife.

Die Formulierung "im Bereich des Randabschnitts" kann für die Formulierung "an dem Randabschnitt" synonym verwendet werden.

Der Erkennungsbereich kann räumlich und/oder um den Outdoorbearbeitungsroboter herum und/oder begrenzt sein.

Das Erkennen des Wechsels kann mit einer, insbesondere werksseitig vorgegebenen, Mindestkonfidenz ausgeführt werden.

Das Erkennen und/oder das Erfassen können/kann berührungslos bzw. -frei sein.

Das Erkennen und/oder das Erfassen bzw. die Erkennungseinrichtung und die Erfassungseinrichtung können verschiedenartig sein und/oder auf verschiedenen Technologien basieren.

Mindestens die Annäherung an die Begrenzungsleitereinrichtung kann mittels des Erfassens einer, insbesondere werksseitig vorgegebenen, Minimalstärke des Begrenzungsleitersignals überwacht werden.

Die Überquerung der Begrenzungsleitereinrichtung kann mittels des Erfassens einer Maximalstärke bzw. -amplitude und/oder einer Phasenumkehr bzw. einer Umkehr einer Phase bzw. eines Vorzeichenwechsels des Begrenzungsleitersignals überwacht werden. In anderen Worten: Die Überquerung der Begrenzungsleitereinrichtung kann über einen Wechsel des Begrenzungsleitersignals von Inside auf Outside überwacht bzw. erkannt werden.

Mindestens die Annäherung an die Begrenzungsleitereinrichtung kann durch den Outdoorbearbeitungsroboter sein.

Der Outdoorbearbeitungsroboter, die Begrenzungsleitereinrichtung, der Erkennungssensor, die Erkennungseinrichtung, der Erfassungssensor und/oder die Erfassungseinrichtung können/kann elektrisch sein.

Der Outdoorbearbeitungsroboter kann die Erkennungseinrichtung und/oder die Erfassungseinrichtung aufweisen.

Der Begriff "umfasst" oder "hat" kann für den Begriff "aufweist" synonym verwendet werden.

Der Begriff "konfiguriert" oder "eingerichtet" kann für den Begriff "ausgebildet" synonym verwendet werden.

Der Begriff "Überprüfen" kann für den Begriff "Überwachen" synonym verwendet werden.

Der Begriff "Kontrollieren" kann für den Begriff "Steuern" synonym verwendet werden.

Das Steuern und das Überwachen können mittels einer, insbesondere elektrischen, Steuerungs- und Überwachungseinrichtung, insbesondere des Outdoorbearbeitungsroboters, ausgeführt werden.

Das Bewegen kann ein Fahren sein.

Das Bewegen kann mittels einer, insbesondere elektrischen, Bewegungseinrichtung des Outdoorbearbeitungsroboters ausgeführt werden.

Der Schritt a) kann kontinuierlich oder fortlaufend ausgeführt werden, insbesondere im Fall nicht einer bzw. keiner Annäherung an die Begrenzungsleitereinrichtung.

Der Schritt b) kann zeitlich nach dem Schritt a) ausgeführt werden.

Das Verfahren kann aufweisen: Bearbeiten der Bodenfläche mittels des Outdoorbearbeitungsroboters, insbesondere während des Schritts a) und/oder des Schritts b).

Die Maximalstärke und/oder die Phasenumkehr des Begrenzungsleitersignals sind/ist innerhalb des Begrenzungsrands bzw. der Bodenfläche erfassbar. Die Begrenzungsleitereinrichtung verläuft innerhalb des Begrenzungsrands bzw. der Bodenfläche. Dies ermöglicht das Überwachen der Überquerung der Begrenzungsleitereinrichtung zeitlich vor einer Überquerung des Begrenzungsrands und somit ein rechtzeitiges Erkennen des Wechsels. Insbesondere kann innerhalb der Begrenzungsleitereinrichtung, insbesondere des Begrenzungsdrahts, im Falls des Erkennens des Wechsels bzw. bei erkanntem Wechsel ebenfalls bzw. auch in Abhängigkeit des Erkennens des Wechsels das Bewegen des Outdoorbearbeitungsroboters gesteuert werden.

Das Steuern des Bewegens des Outdoorbearbeitungsroboters wird derart ausgeführt im Fall mindestens der Annäherung an die Begrenzungsleitereinrichtung und des Erkennens des Wechsels, dass der Outdoorbearbeitungsroboter den Randabschnitt erreicht. Dies ermöglicht ein präzises Bearbeiten der Bodenfläche an bzw. bis zu dem Begrenzungsrand.

In einer Weiterbildung der Erfindung weist die Bodeneigenschaft eine Bodenfarbe und/oder eine Bodenart und/oder ein Bodenmaterial und/oder eine Bodenrauheit und/oder eine Bodenhöhe und/oder eine Hindernisfreiheit und/oder eine Art einer Bepflanzung und/oder eines Bewuchses auf. Insbesondere ist die Bodeneigenschaft die Bodenfarbe und/oder die Bodenart und/oder das Bodenmaterial und/oder die Bodenrauheit und/oder die Bodenhöhe und/oder die Hindernisfreiheit und/oder die Art der Bepflanzung und/oder des Bewuchses. Dies ermöglicht ein besonders gutes Erkennen des Wechsels. Beispielsweise kann der Wechsel zwischen einer grünen Gras- bzw. Rasenfläche und einer grauen Steinterrasse oder braunen Blumenrabatten sein.

In einer Weiterbildung der Erfindung weist der Erkennungssensor einen Grassensor und/oder einen Farbsensor, insbesondere einen Grünsensor, und/oder einen Chlorophyllsensor und/oder einen Bildsensor, insbesondere einer Kamera, und/oder einen Ultraschall-, Funk-, Laser- und/oder Abstandssensor auf. Insbesondere ist der Erkennungssensor der Grassensor und/oder der Farbsensor, insbesondere der Grünsensor, und/oder der Chlorophyllsensor und/oder der Bildsensor und/oder der Ultraschall-, Funk-, Laser- und/oder Abstandssensor. Dies ermöglicht ein besonders gutes Erkennen des Wechsels. Insbesondere kann das Erkennen mittels des Farbsensors auf einem selektiven Erfassen und Bewerten des sichtbaren Spektralbereichs basieren. Zusätzlich oder alternativ kann der Farbsensor ein RGB-Sensor sein. Zusätzlich oder alternativ kann das Erkennen mittels des Chlorophyllsensors auf einem Messen von Chlorophyllfluoreszenz basieren, insbesondere auf einem Senden von elektromagnetischer Strahlung einer ersten Wellenlänge und einem Empfangen von elektromagnetischer Strahlung einer gegenüber der ersten größeren zweiten Wellenlänge, insbesondere angeregt durch die gesendete Strahlung. Weiter zusätzlich oder alternativ kann das Erkennen mittels des Bildsensors auf einem Aufnehmen von zweidimensionalen Abbildern aus Licht auf elektrischem oder mechanischem Wege basieren. Weiter zusätzlich oder alternativ kann das Erkennen mittels des Bildsensors auf einem Auswerten von mittels des Bildsensors aufgenommenen Bilder mit Hilfe von künstlicher Intelligenz basieren, insbesondere einem Segmentieren von Anteilen der Bilder unter Zuhilfenahme von maschinellem Lernen. Weiter zusätzlich oder alternativ kann das Erkennen mittels des Ultraschall-, Funk-, Laser- und/oder Abstandssensors auf einem Überwachen einer unmittelbaren Umgebung des Outdoorbearbeitungsroboters und/oder einem Messen von Abständen, insbesondere zu Hindernissen, basieren. Im Übrigen wird auf die Fachliteratur verwiesen.

In einer Weiterbildung der Erfindung ist der Outdoorbearbeitungsroboter ein Rasenmähroboter, insbesondere mit einem Rasenmähwerkzeug. Dieses Verfahren ermöglicht besondere Vorteile für einen derartigen Outdoorbearbeitungsroboter. Insbesondere kann der Outdoorbearbeitungsroboter ein Mulchmähroboter sein. Zusätzlich oder alternativ kann das Rasenmähwerkzeug mindestens einen Mähfaden, mindestens ein Kunststoffmesser, mindestens ein Metallmesser und/oder ein Metallschneideblatt mit mindestens einer Schneidkante und/oder mit mindestens einem Schneidezahn umfassen. Weiter zusätzlich oder alternativ kann das Rasenmähwerkzeug als ein rotierendes Rasenmähwerkzeug und dazu ausgebildet sein, ein zu mähendes Gut im sogenannten Freischnittverfahren ohne Gegenschneide zu mähen. Weiter zusätzlich oder alternativ kann das Rasenmähwerkzeug zum Mähen der Bodenfläche ausgebildet sein.

In einer Weiterbildung der Erfindung ist das Begrenzungsleitersignal ein elektrisches und/oder magnetisches und/oder elektromagnetisches Signal. Dies ermöglicht ein besonders gutes Erfassen des Begrenzungsleitersignals und somit ein besonders gutes Überwachen mindestens der Annäherung an die Begrenzungsleitereinrichtung. Im Übrigen wird auf die Fachliteratur verwiesen.

In einer Weiterbildung der Erfindung weist der Erfassungssensor einen elektrischen und/oder magnetischen und/oder elektromagnetischen Feldsensor auf. Insbesondere ist der Erfassungssensor der elektrische und/oder magnetische und/oder elektromagnetische Feldsensor. Dies ermöglicht ein besonders gutes Erfassen des Begrenzungsleitersignals und somit ein besonders gutes Überwachen mindestens der Annäherung an die Begrenzungsleitereinrichtung. Insbesondere kann der elektrische und/oder magnetische und/oder elektromagnetische Feldsensor ein Magnetometer sein. Im Übrigen wird auf die Fachliteratur verwiesen.

In einer Weiterbildung der Erfindung verläuft mindestens entlang des Randabschnitts, insbesondere unterhalb der Bodenfläche, die Begrenzungsleitereinrichtung. Zusätzlich oder alternativ ist die Begrenzungsleitereinrichtung dazu ausgebildet, dass durch die Begrenzungsleitereinrichtung ein elektrischer Strom fließt, wobei der Strom das Begrenzungsleitersignal erzeugt. Insbesondere kann parallel zu dem Randabschnitt die Begrenzungsleitereinrichtung verlaufen. Beispielsweise kann die Begrenzungsleitereinrichtung in bis zu 10 Zentimeter Tiefe vergraben sein. Im Übrigen wird auf die Fachliteratur verwiesen.

In einer Weiterbildung der Erfindung weist der Schritt b) auf: im Fall des Erfassens der Maximalstärke und/oder der Phasenumkehr des Begrenzungsleitersignals bzw. der Überquerung der Begrenzungsleitereinrichtung, Steuern des Bewegens des Outdoorbearbeitungsroboters in Abhängigkeit des Erkennens des Wechsels. Dies ermöglicht ein besonders gutes Überwachen der Überquerung der Begrenzungsleitereinrichtung und somit ein rechtzeitiges Steuern des Bewegens des Outdoorbearbeitungsroboters in Abhängigkeit des Erkennens des Wechsels. Insbesondere kann der Schritt a) kontinuierlich oder fortlaufend ausgeführt werden, insbesondere im Fall nicht eines bzw. keines Erfassens der Maximalstärke und/oder der Phasenumkehr des Begrenzungsleitersignals.

In einer Weiterbildung der Erfindung weist das Verfahren auf: im Fall nicht einer bzw. keiner Annäherung an die Begrenzungsleitereinrichtung, Freigeben des Bewegens des Outdoorbearbeitungsroboters auf eine Maximalgeschwindigkeit, insbesondere einen Wert der Maximalgeschwindigkeit, und im Fall mindestens der Annäherung an die Begrenzungsleitereinrichtung, insbesondere und des Erkennens des Wechsels, Beschränken des Bewegens des Outdoorbearbeitungsroboters auf eine gegenüber der Maximalgeschwindigkeit niedrigere Beschränkungsgeschwindigkeit, insbesondere einen Wert der Beschränkungsgeschwindigkeit. Dies ermöglicht einerseits ein schnelles Bearbeiten der Bodenfläche von dem Begrenzungsrand weg bzw. entfernt und andererseits ein präzises Bearbeiten der Bodenfläche an dem Begrenzungsrand und/oder ein Vermeiden einer Überquerung des Begrenzungsrands. Insbesondere können/kann das Freigeben und/oder das Beschränken automatisch sein. Zusätzlich oder alternativ kann die Beschränkungsgeschwindigkeit 25 % (Prozent), insbesondere 50 %, niedriger als die Maximalgeschwindigkeit sein.

In einer Weiterbildung der Erfindung ist mindestens ein anderer Randabschnitt des Begrenzungsrands nicht durch einen erkennbaren Wechsel einer Bodeneigenschaft der Bodenfläche definiert. Ein, insbesondere das, Begrenzungsleitersignal erzeugt mittels der Begrenzungsleitereinrichtung ist an dem anderen Randabschnitt erfassbar. Das Verfahren weist den Schritt auf: c) im Fall mindestens der Annäherung an die Begrenzungsleitereinrichtung und nicht eines bzw. keines Erkennens des Wechsels, insbesondere mit der Mindestkonfidenz, Steuern des Bewegens des Outdoorbearbeitungsroboters in Abhängigkeit des Erfassens des Begrenzungsleitersignals. Dies ermöglicht ein Vermeiden einer Überquerung des Begrenzungsrands und/oder ein Bearbeiten der Bodenfläche an bzw. bis zu der Begrenzungsleitereinrichtung. Insbesondere kann das Steuern des Bewegens des Outdoorbearbeitungsroboters in Abhängigkeit des Erfassens des Begrenzungsleitersignals derart sein, dass der Outdoorbearbeitungsroboter die Begrenzungsleitereinrichtung überquert bzw. erreicht. Zusätzlich oder alternativ kann der Schritt c) zeitlich nach dem Schritt a) ausgeführt werden. Weiter zusätzlich oder alternativ kann das Verfahren aufweisen: Bearbeiten der Bodenfläche mittels des Outdoorbearbeitungsroboters während des Schritts c).

In einer Ausgestaltung der Erfindung wird das Steuern des Bewegens des Outdoorbearbeitungsroboters derart ausgeführt im Fall mindestens der Annäherung an die Begrenzungsleitereinrichtung und nicht eines Erkennens des Wechsels, dass maximal die Maximalstärke und/oder die Phasenumkehr des Begrenzungsleitersignals erfasst werden/wird bzw. der Outdoorbearbeitungsroboter die Begrenzungsleitereinrichtung überquert bzw. erreicht. Dies ermöglicht ein präzises Bearbeiten der Bodenfläche an bzw. bis zu der Begrenzungsleitereinrichtung.

In einer Weiterbildung der Erfindung weist der Outdoorbearbeitungsroboter eine maximale Roboterabmessung, insbesondere einen Wert der maximalen Roboterabmessung, entlang der Bodenfläche auf. Der Erkennungsbereich weist eine maximale Reichweite, insbesondere einen Wert der maximalen Reichweite, von maximal der doppelten, insbesondere einfachen, Roboterabmessung entsprechend, insbesondere gleichend, von dem Outdoorbearbeitungsroboter, insbesondere einer Mitte des Outdoorbearbeitungsroboters, weg auf. Zusätzlich oder alternativ weist der Erkennungsbereich eine, insbesondere die, maximale Reichweite, insbesondere einen Wert der maximalen Reichweite, von maximal 1 m (Meter), insbesondere maximal 0,5 m, von dem Outdoorbearbeitungsroboter, insbesondere einer Mitte des Outdoorbearbeitungsroboters, weg auf. Dies ermöglicht ein besonders gutes Erkennen des, insbesondere relevanten, Wechsels und/oder ein Vermeiden eines Erkennens eines irrelevanten, da entfernten, Wechsels. Insbesondere kann die maximale Roboterabmessung eine Roboterlänge sein. Zusätzlich oder alternativ kann die maximale Reichweite minimal der halben Roboterabmessung entsprechend, insbesondere gleichend, und/oder 0,25 m von dem Outdoorbearbeitungsroboter weg sein. Weiter zusätzlich oder alternativ kann die Begrenzungsleitereinrichtung maximal die maximale Reichweite von dem Randabschnitt weg sein.

Das erfindungsgemäße Outdoorbearbeitungssystem ist zum Betreiben des autonomen mobilen Outdoorbearbeitungsroboters auf der zu bearbeitenden Bodenfläche. Mindestens der Randabschnitt des Begrenzungsrands der Bodenfläche ist durch den erkennbaren Wechsel der Bodeneigenschaft der Bodenfläche definiert. Das Begrenzungsleitersignal erzeugt mittels der Begrenzungsleitereinrichtung ist an dem Randabschnitt erfassbar. Der Outdoorbearbeitungsroboter weist mindestens den Erkennungssensor der Erkennungseinrichtung und mindestens den Erfassungssensor der Erfassungseinrichtung auf. Die Erkennungseinrichtung ist zum Erkennen der Bodeneigenschaft in dem Erkennungsbereich der Erkennungseinrichtung ausgebildet. Die Erfassungseinrichtung ist zum Erfassen des Begrenzungsleitersignals zum Überwachen mindestens der Annäherung an die Begrenzungsleitereinrichtung, insbesondere der Überquerung der Begrenzungsleitereinrichtung, ausgebildet. Das Outdoorbearbeitungssystem weist eine, insbesondere die, Steuerungs- und Überwachungseinrichtung auf. Die Steuerungs- und Überwachungseinrichtung ist dazu ausgebildet: zum Steuern des Bewegens des Outdoorbearbeitungsroboters auf der Bodenfläche und zum Überwachen mindestens der Annäherung an die Begrenzungsleitereinrichtung mittels des Erfassens des Begrenzungsleitersignals während des Bewegens, und im Fall mindestens der Annäherung an die Begrenzungsleitereinrichtung, zum Steuern des Bewegens des Outdoorbearbeitungsroboters in Abhängigkeit des Erkennens des Wechsels derart, dass der Outdoorbearbeitungsroboter innerhalb des Begrenzungsrands bleibt. Die Maximalstärke und/oder die Phasenumkehr des Begrenzungsleitersignals sind/ist innerhalb des Begrenzungsrands erfassbar. Die Begrenzungsleitereinrichtung verläuft innerhalb des Begrenzungsrands. Das Steuern des Bewegens des Outdoorbearbeitungsroboters wird derart ausgeführt im Fall mindestens der Annäherung an die Begrenzungsleitereinrichtung und des Erkennens des Wechsels, dass der Outdoorbearbeitungsroboter den Randabschnitt erreicht.

Das Outdoorbearbeitungssystem kann den/die gleichen Vorteil/e wie für das Verfahren vorhergehend genannt ermöglichen.

Insbesondere kann das Outdoorbearbeitungssystem zum, insbesondere automatischen, Ausführen des Verfahrens wie vorhergehend genannt ausgebildet sein.

Zusätzlich oder alternativ kann das Outdoorbearbeitungssystem elektrisch sein.

Weiter zusätzlich oder alternativ kann die Steuerungs- und Überwachungseinrichtung eine Recheneinrichtung und/oder einen Prozessor und/oder einen Mikrocontroller und/oder eine Speichereinrichtung und/oder einen Computer aufweisen, insbesondere sein.

Weiter zusätzlich oder alternativ kann das Outdoorbearbeitungssystem die Begrenzungsleitereinrichtung aufweisen.

Weiter zusätzlich oder alternativ kann der Outdoorbearbeitungsroboter wie für das Verfahren vorhergehend genannt ausgebildet sein.

In einer Weiterbildung der Erfindung weist das Outdoorbearbeitungssystem den Outdoorbearbeitungsroboter und/oder die Erkennungseinrichtung und/oder die Erfassungseinrichtung auf. Insbesondere weist der Outdoorbearbeitungsroboter die Erkennungseinrichtung und/oder die Erfassungseinrichtung und/oder die Steuerungs- und Überwachungseinrichtung auf.

### KURZBESCHREIBUNG DER ZEICHNUNGEN

Weitere Vorteile und Aspekte der Erfindung ergeben sich aus den Ansprüchen und aus der Beschreibung von einem Ausführungsbeispiel der Erfindung, das nachfolgend anhand der Figuren erläutert ist. Dabei zeigt:
- Fig. 1: ein erfindungsgemäßes Verfahren und ein erfindungsgemäßes Outdoorbearbeitungssystem zum Betreiben eines autonomen mobilen Outdoorbearbeitungsroboters auf einer zu bearbeitenden Bodenfläche, und
- Fig. 2: einen schematischen Verlauf einer Stärke eines Begrenzungsleitersignals erzeugt mittels einer Begrenzungsleitereinrichtung über einem Abstand zu der Begrenzungsleitereinrichtung.

### DETAILLIERTE BESCHREIBUNG DER AUSFÜHRUNGSBEISPIELE

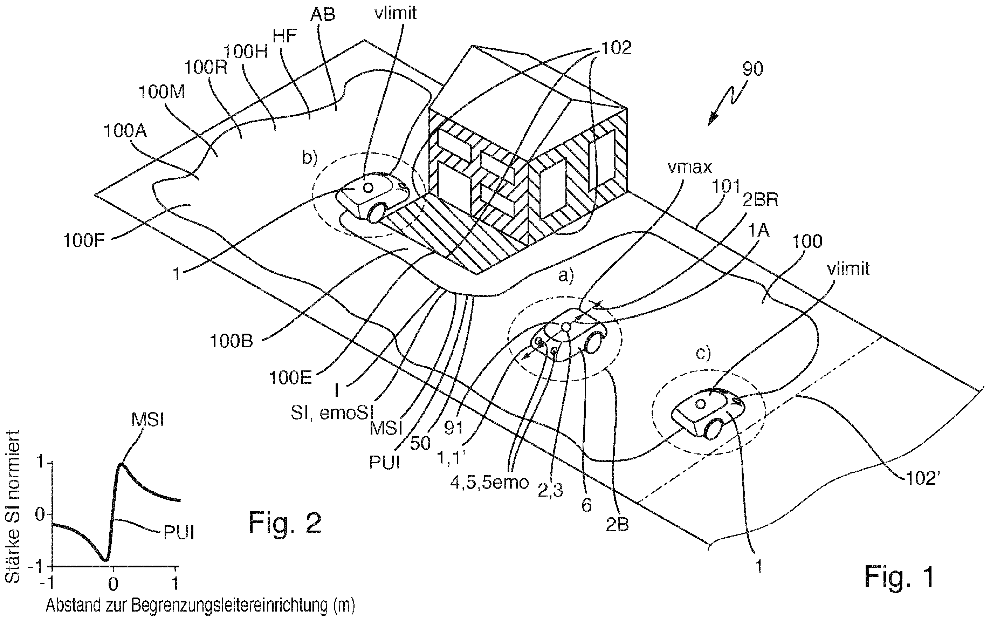

Fig. 1 zeigt ein erfindungsgemäßes Outdoorbearbeitungssystem 90 und ein erfindungsgemäßes Verfahren zum Betreiben eines autonomen mobilen Outdoorbearbeitungsroboters 1 auf einer zu bearbeitenden Bodenfläche 100. Mindestens ein Randabschnitt 102 eines Begrenzungsrands 101 der Bodenfläche 100 ist durch einen erkennbaren Wechsel 100E einer Bodeneigenschaft 100B der Bodenfläche 100 definiert. Ein Begrenzungsleitersignal SI erzeugt mittels einer Begrenzungsleitereinrichtung 50 ist an dem Randabschnitt 102 erfassbar. Der Outdoorbearbeitungsroboter 1 weist mindestens einen Erkennungssensor 3 einer Erkennungseinrichtung 2 und mindestens einen Erfassungssensor 5 einer Erfassungseinrichtung 4 auf. Die Erkennungseinrichtung 3 ist zum Erkennen der Bodeneigenschaft 100E in einem Erkennungsbereich 2B der Erkennungseinrichtung 2 ausgebildet, insbesondere erkennt. Die Erfassungseinrichtung 4 ist zum Erfassen des Begrenzungsleitersignals SI zum Überwachen mindestens einer Annäherung an die Begrenzungsleitereinrichtung 50, insbesondere einer Überquerung der Begrenzungsleitereinrichtung 50, ausgebildet, insbesondere erfasst und überwacht.

Das Outdoorbearbeitungssystem 90 weist eine Steuerungs- und Überwachungseinrichtung 91 auf. Die Steuerungs- und Überwachungseinrichtung 91 ist dazu ausgebildet: zum Steuern eines Bewegens des Outdoorbearbeitungsroboters 1 auf der Bodenfläche 100 und zum Überwachen mindestens der Annäherung an die Begrenzungsleitereinrichtung 50 mittels des Erfassens des Begrenzungsleitersignals SI während des Bewegens, insbesondere steuert und überwacht, und im Fall mindestens der Annäherung an die Begrenzungsleitereinrichtung 50, zum Steuern des Bewegens des Outdoorbearbeitungsroboters 1 in Abhängigkeit des Erkennens des Wechsels 100E derart, dass der Outdoorbearbeitungsroboter 1 innerhalb des Begrenzungsrands 101 bleibt, insbesondere steuert.

Das Verfahren weist die Schritte auf: a) Steuern des Bewegens des Outdoorbearbeitungsroboters 1 auf der Bodenfläche 100 und Überwachen mindestens der Annäherung an die Begrenzungsleitereinrichtung 50 mittels des Erfassens des Begrenzungsleitersignals SI während des Bewegens, insbesondere mittels der Steuerungs- und Überwachungseinrichtung 91. b) im Fall mindestens der Annäherung an die Begrenzungsleitereinrichtung 50, Steuern des Bewegens des Outdoorbearbeitungsroboters 1 in Abhängigkeit des Erkennens des Wechsels 100E derart, dass der Outdoorbearbeitungsroboter 1 innerhalb des Begrenzungsrands 101 bleibt, insbesondere mittels der Steuerungs- und Überwachungseinrichtung 91.

Im Detail weist das Outdoorbearbeitungssystem 90 den Outdoorbearbeitungsroboter 1 und/oder die Erkennungseinrichtung 2 und/oder die Erfassungseinrichtung 4 auf. Insbesondere weist der Outdoorbearbeitungsroboter 1 die Erkennungseinrichtung 2 und/oder die Erfassungseinrichtung 4 und/oder die Steuerungs- und Überwachungseinrichtung 91 auf.

Des Weiteren weist die Bodeneigenschaft 100B eine Bodenfarbe 100F und/oder eine Bodenart 100A und/oder ein Bodenmaterial 100M und/oder eine Bodenrauheit 100R und/oder eine Bodenhöhe 100H und/oder eine Hindernisfreiheit HF und/oder eine Art einer Bepflanzung und/oder eines Bewuchses AB auf. Insbesondere ist die Bodeneigenschaft 100B die Bodenfarbe 100f und/oder die Bodenart 100a und/oder das Bodenmaterial 100M und/oder die Bodenrauheit 100r und/oder die Bodenhöhe 100H und/oder die Hindernisfreiheit HF und/oder die Art der Bepflanzung und/oder des Bewuchses AB.

Außerdem weist der Erkennungssensor 3 einen Grassensor 3R und/oder einen Farbsensor 3F, insbesondere einen Grünsensor 3G, und/oder einen Chlorophyllsensor 3C und/oder einen Bildsensor 3B und/oder einen Ultraschall-, Funk-, Laser- und/oder Abstandssensor 3S auf. Insbesondere ist der Erkennungssensor 3 der Grassensor 3R und/oder der Farbsensor 3F, insbesondere der Grünsensor 3G, und/oder der Chlorophyllsensor 3C und/oder der Bildsensor 3B und/oder der Ultraschall-, Funk-, Laser- und/oder Abstandssensor 3S.

Weiter ist der Outdoorbearbeitungsroboter 1 ein Rasenmähroboter 1', insbesondere mit einem Rasenmähwerkzeug 6.

Zudem ist das Begrenzungsleitersignal SI ein elektrisches und/oder magnetisches und/oder elektromagnetisches Signal emoSI.

Des Weiteren weist der Erfassungssensor 5 einen elektrischen und/oder magnetischen und/oder elektromagnetischen Feldsensor 5emo auf. Insbesondere ist der Erfassungssensor 5 der elektrische und/oder magnetische und/oder elektromagnetische Feldsensor 5emo.

Außerdem verläuft entlang des Randabschnitts 102, insbesondere unterhalb der Bodenfläche 100, die Begrenzungsleitereinrichtung 50. Zusätzlich oder alternativ ist die Begrenzungsleitereinrichtung 50 dazu ausgebildet, dass durch die Begrenzungsleitereinrichtung 50 ein elektrischer Strom I fließt, wobei der Strom I das Begrenzungsleitersignal SI erzeugt.

Weiter sind/ist eine Maximalstärke MSI und/oder eine Phasenumkehr PUI des Begrenzungsleitersignals SI innerhalb des Begrenzungsrands 101 erfassbar, wie in Fig. 2 gezeigt. Die Begrenzungsleitereinrichtung 50 verläuft innerhalb des Begrenzungsrands 101.

Zudem weist der Schritt b) auf: im Fall des Erfassens der Maximalstärke MSI und/oder der Phasenumkehr PUI des Begrenzungsleitersignals SI, Steuern des Bewegens des Outdoorbearbeitungsroboters 1 in Abhängigkeit des Erkennens des Wechsels 100E.

Des Weiteren weist das Verfahren auf: im Fall nicht einer Annäherung an die Begrenzungsleitereinrichtung 50, Freigeben des Bewegens des Outdoorbearbeitungsroboters 1 auf eine Maximalgeschwindigkeit vmax, und im Fall mindestens der Annäherung an die Begrenzungsleitereinrichtung 50, insbesondere und des Erkennens des Wechsels 100E, Beschränken des Bewegens des Outdoorbearbeitungsroboters 1 auf eine gegenüber der Maximalgeschwindigkeit vmax niedrigere Beschränkungsgeschwindigkeit vlimit.

Außerdem ist mindestens ein anderer Randabschnitt 102' des Begrenzungsrands 101 nicht durch einen erkennbaren Wechsel einer Bodeneigenschaft 100B der Bodenfläche 100 definiert. Das Begrenzungsleitersignal SI erzeugt mittels der Begrenzungsleitereinrichtung 50 ist an dem anderen Randabschnitt 102' erfassbar. Das Verfahren weist den Schritt auf: c) im Fall mindestens der Annäherung an die Begrenzungsleitereinrichtung 50 und nicht eines Erkennens des Wechsels 100E, Steuern des Bewegens des Outdoorbearbeitungsroboters 1 in Abhängigkeit des Erfassens des Begrenzungsleitersignals SI, insbesondere mittels der Steuerungs- und Überwachungseinrichtung 91.

Weiter wird das Steuern des Bewegens des Outdoorbearbeitungsroboters 1 derart ausgeführt im Fall mindestens der Annäherung an die Begrenzungsleitereinrichtung 50 und des Erkennens des Wechsels 100E, dass der Outdoorbearbeitungsroboter 1 den Randabschnitt 102 erreicht. Zusätzlich wird das Steuern des Bewegens des Outdoorbearbeitungsroboters 1 derart ausgeführt im Fall mindestens der Annäherung an die Begrenzungsleitereinrichtung 50 und nicht eines Erkennens des Wechsels 100E, dass maximal die Maximalstärke MSI und/oder die Phasenumkehr PUI des Begrenzungsleitersignals SI erfasst werden/wird.

Zudem weist der Outdoorbearbeitungsroboter 1 eine maximale Roboterabmessung 1A entlang der Bodenfläche 100 auf. Der Erkennungsbereich 2B weist eine maximale Reichweite 2BR von maximal der doppelten Roboterabmessung 1A entsprechend, insbesondere gleichend, von dem Outdoorbearbeitungsroboter 1 weg auf. Zusätzlich oder alternativ weist der Erkennungsbereich 2B die maximale Reichweite 2BR von maximal 1 m von dem Outdoorbearbeitungsroboter 1 weg auf.

Wie das gezeigte und oben erläuterte Ausführungsbeispiel deutlich macht, stellt die Erfindung ein vorteilhaftes Verfahren und ein vorteilhaftes Outdoorbearbeitungssystem zum Betreiben eines autonomen mobilen Outdoorbearbeitungsroboters auf einer zu bearbeitenden Bodenfläche bereit, das verbesserte Eigenschaften aufweist, insbesondere nutzerfreundlicher ist.

## Patentansprüche

1. Verfahren zum Betreiben eines autonomen mobilen Outdoorbearbeitungsroboters (1) auf einer zu bearbeitenden Bodenfläche (100),
- wobei mindestens ein Randabschnitt (102) eines Begrenzungsrands (101) der Bodenfläche (100) durch einen erkennbaren Wechsel (100E) einer Bodeneigenschaft (100B) der Bodenfläche (100) definiert ist,
- wobei ein Begrenzungsleitersignal (SI) erzeugt mittels einer Begrenzungsleitereinrichtung (50) an dem Randabschnitt (102) erfassbar ist, und
- wobei der Outdoorbearbeitungsroboter (1) aufweist:
- mindestens einen Erkennungssensor (3) einer Erkennungseinrichtung (2), wobei die Erkennungseinrichtung (3) zum Erkennen der Bodeneigenschaft (100E) in einem Erkennungsbereich (2B) der Erkennungseinrichtung (2) ausgebildet ist, und
- mindestens einen Erfassungssensor (5) einer Erfassungseinrichtung (4), wobei die Erfassungseinrichtung (4) zum Erfassen des Begrenzungsleitersignals (SI) zum Überwachen mindestens einer Annäherung an die Begrenzungsleitereinrichtung (50), insbesondere einer Überquerung der Begrenzungsleitereinrichtung (50), ausgebildet ist,
- wobei das Verfahren die Schritte aufweist:
a) Steuern eines Bewegens des Outdoorbearbeitungsroboters (1) auf der Bodenfläche (100) und Überwachen mindestens der Annäherung an die Begrenzungsleitereinrichtung (50) mittels des Erfassens des Begrenzungsleitersignals (SI) während des Bewegens, und
b) im Fall mindestens der Annäherung an die Begrenzungsleitereinrichtung (50), Steuern des Bewegens des Outdoorbearbeitungsroboters (1) in Abhängigkeit des Erkennens des Wechsels (100E) derart, dass der Outdoorbearbeitungsroboter (1) innerhalb des Begrenzungsrands (101) bleibt,
- wobei eine Maximalstärke (MSI) und/oder eine Phasenumkehr (PUI) des Begrenzungsleitersignals (SI) innerhalb des Begrenzungsrands (101) erfassbar sind/ist, **dadurch gekennzeichnet, dass** die Begrenzungsleitereinrichtung (50) innerhalb des Begrenzungsrands (101) verläuft,
- wobei das Steuern des Bewegens des Outdoorbearbeitungsroboters (1) derart ausgeführt wird im Fall mindestens der Annäherung an die Begrenzungsleitereinrichtung (50) und des Erkennens des Wechsels (100E), dass der Outdoorbearbeitungsroboter (1) den Randabschnitt (102) erreicht.

2. Verfahren nach dem vorhergehenden Anspruch,
wobei die Bodeneigenschaft (100B) eine Bodenfarbe (100F) und/oder eine Bodenart (100A) und/oder ein Bodenmaterial (100M) und/oder eine Bodenrauheit (100R) und/oder eine Bodenhöhe (100H) und/oder eine Hindernisfreiheit (HF) und/oder eine Art einer Bepflanzung und/oder eines Bewuchses (AB) aufweist, insbesondere ist.

3. Verfahren nach einem der vorhergehenden Ansprüche,
- wobei der Erkennungssensor (3) einen Grassensor (3R) und/oder einen Farbsensor (3F), insbesondere einen Grünsensor (3G), und/oder einen Chlorophyllsensor (3C) und/oder einen Bildsensor (3B) und/oder einen Ultraschall-, Funk-, Laser- und/oder Abstandssensor (3S) aufweist, insbesondere ist.

4. Verfahren nach einem der vorhergehenden Ansprüche,
- wobei der Outdoorbearbeitungsroboter (1) ein Rasenmähroboter (1'), insbesondere mit einem Rasenmähwerkzeug (6), ist.

5. Verfahren nach einem der vorhergehenden Ansprüche,
- wobei das Begrenzungsleitersignal (SI) ein elektrisches und/oder magnetisches und/oder elektromagnetisches Signal (emoSI) ist.

6. Verfahren nach einem der vorhergehenden Ansprüche,
- wobei der Erfassungssensor (5) einen elektrischen und/oder magnetischen und/oder elektromagnetischen Feldsensor (5emo) aufweist, insbesondere ist.

7. Verfahren nach einem der vorhergehenden Ansprüche,
- wobei entlang des Randabschnitts (102), insbesondere unterhalb der Bodenfläche (100), die Begrenzungsleitereinrichtung (50) verläuft, und/oder
- wobei die Begrenzungsleitereinrichtung (50) dazu ausgebildet ist, dass durch die Begrenzungsleitereinrichtung (50) ein elektrischer Strom (I) fließt, wobei der Strom (I) das Begrenzungsleitersignal (SI) erzeugt.

8. Verfahren nach einem der vorhergehenden Ansprüche,
- wobei der Schritt b) aufweist: im Fall des Erfassens der Maximalstärke (MSI) und/oder der Phasenumkehr (PUI) des Begrenzungsleitersignals (SI), Steuern des Bewegens des Outdoorbearbeitungsroboters (1) in Abhängigkeit des Erkennens des Wechsels (100E).

9. Verfahren nach einem der vorhergehenden Ansprüche,
- wobei das Verfahren aufweist:
- im Fall nicht einer Annäherung an die Begrenzungsleitereinrichtung (50), Freigeben des Bewegens des Outdoorbearbeitungsroboters (1) auf eine Maximalgeschwindigkeit (vmax), und
- im Fall mindestens der Annäherung an die Begrenzungsleitereinrichtung (50), insbesondere und des Erkennens des Wechsels (100E), Beschränken des Bewegens des Outdoorbearbeitungsroboters (1) auf eine gegenüber der Maximalgeschwindigkeit (vmax) niedrigere Beschränkungsgeschwindigkeit (vlimit).

10. Verfahren nach einem der vorhergehenden Ansprüche,
- wobei mindestens ein anderer Randabschnitt (102') des Begrenzungsrands (101) nicht durch einen erkennbaren Wechsel einer Bodeneigenschaft (100B) der Bodenfläche (100) definiert ist, und wobei ein, insbesondere das, Begrenzungsleitersignal (SI) erzeugt mittels der Begrenzungsleitereinrichtung (50) an dem anderen Randabschnitt (102') erfassbar ist, und
- wobei das Verfahren den Schritt aufweist:
c) im Fall mindestens der Annäherung an die Begrenzungsleitereinrichtung (50) und nicht eines Erkennens des Wechsels (100E), Steuern des Bewegens des Outdoorbearbeitungsroboters (1) in Abhängigkeit des Erfassens des Begrenzungsleitersignals (SI).

11. Verfahren nach dem vorhergehenden Anspruch,
- wobei das Steuern des Bewegens des Outdoorbearbeitungsroboters (1) derart ausgeführt wird im Fall mindestens der Annäherung an die Begrenzungsleitereinrichtung (50) und nicht eines Erkennens des Wechsels (100E), dass maximal die Maximalstärke (MSI) und/oder die Phasenumkehr (UPI) des Begrenzungsleitersignals (SI) erfasst werden/wird.

12. Verfahren nach einem der vorhergehenden Ansprüche,
- wobei der Outdoorbearbeitungsroboter (1) eine maximale Roboterabmessung (1A) entlang der Bodenfläche (100) aufweist, wobei der Erkennungsbereich (2B) eine maximale Reichweite (2BR) von maximal der doppelten Roboterabmessung (1A) entsprechend, insbesondere gleichend, von dem Outdoorbearbeitungsroboter (1) weg aufweist, und/oder
- wobei der Erkennungsbereich (2B) eine, insbesondere die, maximale Reichweite (2BR) von maximal 1 m von dem Outdoorbearbeitungsroboter (1) weg aufweist.

13. Outdoorbearbeitungssystem (90) zum Betreiben eines autonomen mobilen Outdoorbearbeitungsroboters (1) auf einer zu bearbeitenden Bodenfläche (100), insbesondere zum Ausführen eines Verfahrens nach einem der vorhergehenden Ansprüche,
- wobei mindestens ein Randabschnitt (102) eines Begrenzungsrands (101) der Bodenfläche (100) durch einen erkennbaren Wechsel (100E) einer Bodeneigenschaft (100B) der Bodenfläche (100) definiert ist,
- wobei ein Begrenzungsleitersignal (SI) erzeugt mittels einer Begrenzungsleitereinrichtung (50) an dem Randabschnitt (102) erfassbar ist, und
- wobei der Outdoorbearbeitungsroboter (1) aufweist:
- mindestens einen Erkennungssensor (3) einer Erkennungseinrichtung (2), wobei die Erkennungseinrichtung (3) zum Erkennen der Bodeneigenschaft (100E) in einem Erkennungsbereich (2B) der Erkennungseinrichtung (2) ausgebildet ist, und
- mindestens einen Erfassungssensor (5) einer Erfassungseinrichtung (4), wobei die Erfassungseinrichtung (4) zum Erfassen des Begrenzungsleitersignals (SI) zum Überwachen mindestens einer Annäherung an die Begrenzungsleitereinrichtung (50), insbesondere einer Überquerung der Begrenzungsleitereinrichtung (50), ausgebildet ist,
- wobei das Outdoorbearbeitungssystem (90) eine Steuerungs- und Überwachungseinrichtung (91) aufweist, wobei die Steuerungs- und Überwachungseinrichtung (91) dazu ausgebildet ist:
- zum Steuern eines Bewegens des Outdoorbearbeitungsroboters (1) auf der Bodenfläche (100) und zum Überwachen mindestens der Annäherung an die Begrenzungsleitereinrichtung (50) mittels des Erfassens des Begrenzungsleitersignals (SI) während des Bewegens, und
- im Fall mindestens der Annäherung an die Begrenzungsleitereinrichtung (50), zum Steuern des Bewegens des Outdoorbearbeitungsroboters (1) in Abhängigkeit des Erkennens des Wechsels (100E) derart, dass der Outdoorbearbeitungsroboter (1) innerhalb des Begrenzungsrands (101) bleibt,
- wobei eine Maximalstärke (MSI) und/oder eine Phasenumkehr (PUI) des Begrenzungsleitersignals (SI) innerhalb des Begrenzungsrands (101) erfassbar sind/ist, **dadurch gekennzeichnet, dass** die Begrenzungsleitereinrichtung (50) innerhalb des Begrenzungsrands (101) verläuft,
- wobei das Steuern des Bewegens des Outdoorbearbeitungsroboters (1) derart ausgeführt wird im Fall mindestens der Annäherung an die Begrenzungsleitereinrichtung (50) und des Erkennens des Wechsels (100E), dass der Outdoorbearbeitungsroboter (1) den Randabschnitt (102) erreicht.

14. Outdoorbearbeitungssystem (90) nach dem vorhergehenden Anspruch,
- wobei das Outdoorbearbeitungssystem (90) den Outdoorbearbeitungsroboter (1) und/oder die Erkennungseinrichtung (2) und/oder die Erfassungseinrichtung (4) aufweist, insbesondere wobei der Outdoorbearbeitungsroboter (1) die Erkennungseinrichtung (2) und/oder die Erfassungseinrichtung (4) und/oder die Steuerungs- und Überwachungseinrichtung (91) aufweist.

## Claims

1. Method for operating an autonomous mobile outdoor maintenance robot (1) on an area of ground (100) to be maintained,
- wherein at least one edge section (102) of a boundary edge (101) of the area of ground (100) is defined by a detectable change (100E) of a ground property (100B) of the area of ground (100),
- wherein a boundary conductor signal (SI), generated by means of a boundary conductor device (50), can be registered at the edge section (102), and
- wherein the outdoor maintenance robot (1) comprises:
- at least one detecting sensor (3) of a detecting device (2), wherein the detecting device (3) is designed for detecting the ground property (100E) in a detecting region (2B) of the detecting device (2), and
- at least one registering sensor (5) of a registering device (4), wherein the registering device (4) is designed for registering the boundary conductor signal (SI) for monitoring at least an approach to the boundary conductor device (50), in particular a crossing of the boundary conductor device (50),
- wherein the method comprises the following steps:
a) controlling the movement of the outdoor maintenance robot (1) on the area of ground (100) and monitoring at least an approach to the boundary conductor device (50) by means of registering the boundary conductor signal (SI) during the movement and
b) in the case where the boundary conductor device (50) is at least approached, controlling the movement of the outdoor maintenance robot (1) in dependence on the detection of the change (100E) in such a way that the outdoor maintenance robot (1) remains within the boundary edge (101),
- wherein a maximum strength (MSI) and/or a phase reversal (PUI) of the boundary conductor signal (SI) within the boundary edge (101) are/is registerable, **characterized in that** the boundary conductor device (50) runs within the boundary edge (101),
- wherein the control of the movement of the outdoor maintenance robot (1) is performed in such a way that, in the case where the boundary conductor device (50) is at least approached and the change (100E) is detected, the outdoor maintenance robot (1) reaches the edge section (102).

2. Method according to the preceding claim,
wherein the ground property (100B) comprises, in particular is, a ground colour (100F) and/or a ground type (100A) and/or a ground material (100M) and/or a ground roughness (100R) and/or a ground height (100H) and/or an obstacle clearance (HF) and/or a type of vegetation and/or plant cover (AB).

3. Method according to one of the preceding claims,
- wherein the detecting sensor (3) comprises, in particular is, a grass sensor (3R) and/or a colour sensor (3F), in particular a green sensor (3G), and/or a chlorophyll sensor (3C) and/or an image sensor (3B) and/or an ultrasonic, radio, laser and/or distance sensor (3S).

4. Method according to one of the preceding claims,
- wherein the outdoor maintenance robot (1) is a lawn mower robot (1'), in particular with a lawn mower tool (6).

5. Method according to one of the preceding claims,
- wherein the boundary conductor signal (SI) is an electrical and/or magnetic and/or electromagnetic signal (emoSI).

6. Method according to one of the preceding claims,
- wherein the registering sensor (5) comprises, in particular is, an electrical and/or magnetic and/or electromagnetic field sensor (5emo).

7. Method according to one of the preceding claims,
- wherein the boundary conductor device (50) runs along the edge section (102), in particular under the area of ground (100), and/or
- wherein the boundary conductor device (50) is designed for the purpose that an electric current (I) flows through the boundary conductor device (50), wherein the current (I) generates the boundary conductor signal (SI).

8. Method according to one of the preceding claims,
- wherein step b) comprises: in the case where the maximum strength (MSI) and/or the phase reversal (PUI) of the boundary conductor signal (SI) is/are registered, controlling the movement of the outdoor maintenance robot (1) in dependence on the detection of the change (100E).

9. Method according to one of the preceding claims,
- wherein the method comprises:
- in the case where the boundary conductor device (50) is not approached, enabling the movement of the outdoor maintenance robot (1) to a maximum speed (vmax), and
- in the case where the boundary conductor device (50) is at least approached, in particular the change (100E) is detected, limiting the movement of the outdoor maintenance robot (1) to a limiting speed (vlimit) lower than the maximum speed (vmax).

10. Method according to one of the preceding claims,
- wherein at least one other edge section (102') of the boundary edge (101) is not defined by a detectable change of a ground property (100B) of the area of ground (100), and wherein a, in particular the, boundary conductor signal (SI), generated by means of the boundary conductor device (50), is registerable at the other edge section (102'), and
- wherein the method comprises the following step:
c) in the case where the boundary conductor device (50) is at least approached and the change (100E) is not detected, controlling the movement of the outdoor maintenance robot (1) in dependence on the registering of the boundary conductor signal (SI).

11. Method according to the preceding claim,
- wherein the control of the movement of the outdoor maintenance robot (1) is performed in such a way that, in the case where the boundary conductor device (50) is at least approached and the change (100E) is not detected, at most the maximum strength (MSI) and/or the phase reversal (UPI) of the boundary conductor signal (SI) are/is registered.

12. Method according to one of the preceding claims,
- wherein the outdoor maintenance robot (1) comprises a maximum robot dimension (1A) along the area of ground (100), wherein the detecting region (2B) has a maximum range (2BR) corresponding to, in particular equal to, at most twice the robot dimension (1A) away from the outdoor maintenance robot (1), and/or
- wherein the detecting region (2B) has a, in particular the, maximum range (2BR) of at most 1 m away from the outdoor maintenance robot (1).

13. Outdoor maintenance system (90) for operating an autonomous mobile outdoor maintenance robot (1) on an area of ground (100) to be maintained, in particular for performing the method according to one of the preceding claims,
- wherein at least one edge section (102) of a boundary edge (101) of the area of ground (100) is defined by a detectable change (100E) of a ground property (100B) of the area of ground (100),
- wherein a boundary conductor signal (SI), generated by means of a boundary conductor device (50), can be registered at the edge section (102), and
- wherein the outdoor maintenance robot (1) comprises:
- at least one detecting sensor (3) of a detecting device (2), wherein the detecting device (3) is designed for detecting the ground property (100E) in a detecting region (2B) of the detecting device (2), and
- at least one registering sensor (5) of a registering device (4), wherein the registering device (4) is designed for registering the boundary conductor signal (SI) for monitoring at least an approach to the boundary conductor device (50), in particular a crossing of the boundary conductor device (50),
- wherein the outdoor maintenance system (90) comprises a controlling and monitoring device (91), wherein the controlling and monitoring device (91) is designed:
- for controlling the movement of the outdoor maintenance robot (1) on the area of ground (100) and for monitoring at least an approach to the boundary conductor device (50) by means of registering the boundary conductor signal (SI) during the movement and
- in the case where the boundary conductor device (50) is at least approached, for controlling the movement of the outdoor maintenance robot (1) in dependence on the detection of the change (100E) in such a way that the outdoor maintenance robot (1) remains within the boundary edge (101),
- wherein a maximum strength (MSI) and/or a phase reversal (PUI) of the boundary conductor signal (SI) within the boundary edge (101) are/is registerable, **characterized in that** the boundary conductor device (50) runs within the boundary edge (101),
- wherein the control of the movement of the outdoor maintenance robot (1) is performed in such a way that, in the case where the boundary conductor device (50) is at least approached and the change (100E) is detected, the outdoor maintenance robot (1) reaches the edge section (102).

14. Outdoor maintenance system (90) according to the preceding claim,
- wherein the outdoor maintenance system (90) comprises the outdoor maintenance robot (1) and/or the detecting device (2) and/or the registering device (4), in particular wherein the outdoor maintenance robot (1) comprises the detecting device (2) and/or the registering device (4) and/or the controlling and monitoring device (91).

## Revendications

1. Procédé de fonctionnement d'un robot d'entretien extérieur (1) autonome mobile sur une surface du sol (100) à traiter,
- dans lequel au moins une section de bord (102) d'une bordure de délimitation (101) de la surface du sol (100) est définie par un changement reconnaissable (100E) d'une propriété du sol (100B) de la surface du sol (100),
- dans lequel un signal de conducteur de délimitation (SI) généré au moyen d'un dispositif à conducteur de délimitation (50) peut être détecté au niveau de la section de bord (102), et
- dans lequel le robot d'entretien extérieur (1) comprend :
- au moins un capteur de reconnaissance (3) d'un dispositif de reconnaissance (2), le dispositif de reconnaissance (3) étant conçu pour reconnaître la propriété du sol (100E) dans une zone de reconnaissance (2B) du dispositif de reconnaissance (2), et
- au moins un capteur de détection (5) d'un dispositif de détection (4), le dispositif de détection (4) étant conçu pour détecter le signal de conducteur de délimitation (SI) pour surveiller au moins le rapprochement vers le dispositif à conducteur de délimitation (50), en particulier un franchissement du dispositif à conducteur de délimitation (50),
- le procédé comprenant les étapes consistant à :
a) commander un déplacement du robot d'entretien extérieur (1) sur la surface du sol (100) et surveiller au moins le rapprochement vers le dispositif à conducteur de délimitation (50) par la détection du signal de conducteur de délimitation (SI) pendant le déplacement, et
b) en cas d'au moins un rapprochement vers le dispositif à conducteur de délimitation (50), commander le déplacement du robot d'entretien extérieur (1) en fonction de la reconnaissance du changement (100E) de telle sorte que le robot d'entretien extérieur (1) reste à l'intérieur de la bordure de délimitation (101),
- une intensité maximale (MSI) et/ou une inversion de phase (PUI) du signal de conducteur de délimitation (SI) pouvant être détectées à l'intérieur de la bordure de délimitation (101), **caractérisé en ce que** le dispositif à conducteur de délimitation (50) s'étend à l'intérieur de la bordure de délimitation (101),
- la commande du déplacement du robot d'entretien extérieur (1) étant effectuée de telle sorte qu'en cas d'au moins un rapprochement vers le dispositif à conducteur de délimitation (50) et de reconnaissance du changement (100E), le robot d'entretien extérieur (1) atteigne la section de bord (102).

2. Procédé selon la revendication précédente,
dans lequel la propriété du sol (100B) comprend, en particulier est une couleur du sol (100F) et/ou un type de sol (100A) et/ou un matériau du sol (100M) et/ou une rugosité du sol (100R) et/ou une hauteur du sol (100H) et/ou une absence d'obstacles (HF) et/ou un type de plantation et/ou de couverture végétale (AB).

3. Procédé selon l'une des revendications précédentes,
- dans lequel le capteur de reconnaissance (3) comprend, en particulier est un capteur d'herbe (3R) et/ou un capteur de couleur (3F), un capteur de vert (3G), et/ou un capteur de chlorophylle (3C) et/ou un capteur d'image (3B) et/ou un capteur à ultrasons, radio, laser et/ou de distance (3S).

4. Procédé selon l'une des revendications précédentes,
- dans lequel le robot d'entretien extérieur (1) est réalisé sous la forme d'un robot tondeur (1'), notamment doté d'un outil de tonte de gazon (6).

5. Procédé selon l'une des revendications précédentes,
- dans lequel le signal de conducteur de délimitation (SI) est un signal électrique et/ou magnétique et/ou électromagnétique (emoSI).

6. Procédé selon l'une des revendications précédentes,
- dans lequel le capteur de détection (5) comprend, en particulier est un capteur de champ électrique et/ou magnétique et/ou électromagnétique (5emo).

7. Procédé selon l'une des revendications précédentes,
- dans lequel le dispositif à conducteur de délimitation (50) s'étend le long de la section de bord (102), en particulier au-dessous de la surface du sol (100), et/ou
- dans lequel le dispositif à conducteur de délimitation (50) est conçu de telle sorte qu'un courant électrique (I) circule à travers le dispositif à conducteur de délimitation (50), le courant (I) générant le signal de conducteur de délimitation (SI).

8. Procédé selon l'une des revendications précédentes,
- dans lequel l'étape b) comprend l'étape consistant à : en cas de détection de l'intensité maximale (MSI) et/ou de l'inversion de phase (PUI) du signal de conducteur de délimitation (SI), commander le déplacement du robot d'entretien extérieur (1) en fonction de la reconnaissance du changement (100E).

9. Procédé selon l'une des revendications précédentes,
- le procédé comprenant les étapes consistant à :
- en cas d'absence de rapprochement vers le dispositif à conducteur de délimitation (50), autoriser le déplacement du robot d'entretien extérieur (1) à une vitesse maximale (vmax), et
- en cas d'au moins un rapprochement vers le dispositif à conducteur de délimitation (50), en particulier en cas de reconnaissance du changement (100E), limiter le déplacement du robot d'entretien extérieur (1) à une vitesse de restriction (vlimit) inférieure à la vitesse maximale (vmax).

10. Procédé selon l'une des revendications précédentes,
- dans lequel au moins une autre section de bord (102') de la bordure de délimitation (101) n'est pas définie par un changement reconnaissable d'une propriété du sol (100B) de la surface du sol (100), et dans lequel un, en particulier le signal de conducteur de délimitation (SI) généré au moyen du dispositif à conducteur de délimitation (50) peut être détecté au niveau de l'autre section de bord (102'), et
- le procédé comprenant l'étape consistant à :
c) en cas d'au moins un rapprochement vers le dispositif à conducteur de délimitation (50) et d'absence de reconnaissance du changement (100E), commander le déplacement du robot d'entretien extérieur (1) en fonction de la détection du signal de conducteur de délimitation (SI).

11. Procédé selon la revendication précédente,
- dans lequel la commande du déplacement du robot d'entretien extérieur (1) est effectuée, en cas d'au moins un rapprochement vers le dispositif à conducteur de délimitation (50) et d'absence de reconnaissance du changement (100E), de telle sorte qu'au maximum l'intensité maximale (MSI) et/ou l'inversion de phase (UPI) du signal de conducteur de délimitation (SI) soient détectées.

12. Procédé selon l'une des revendications précédentes,
- dans lequel le robot d'entretien extérieur (1) présente une dimension maximale de robot (1A) le long de la surface du sol (100), la zone de reconnaissance (2B) présentant une portée maximale (2BR) par rapport au robot d'entretien extérieur (1) correspondant, en particulier égale, au maximum à deux fois la dimension de robot (1A), et/ou
- dans lequel la zone de reconnaissance (2B) présente une portée maximale (2BR), en particulier ladite portée maximale, d'au plus 1 m par rapport au robot d'entretien extérieur (1).

13. Système d'entretien extérieur (90) pour faire fonctionner un robot d'entretien extérieur (1) autonome mobile sur une surface du sol (100) à traiter, en particulier pour mettre en œuvre un procédé selon l'une des revendications précédentes,
- dans lequel au moins une section de bord (102) d'une bordure de délimitation (101) de la surface du sol (100) est définie par un changement reconnaissable (100E) d'une propriété du sol (100B) de la surface du sol (100),
- dans lequel un signal de conducteur de délimitation (SI) généré au moyen d'un dispositif à conducteur de délimitation (50) peut être détecté au niveau de la section de bord (102), et
- dans lequel le robot d'entretien extérieur (1) comprend :
- au moins un capteur de reconnaissance (3) d'un dispositif de reconnaissance (2), le dispositif de reconnaissance (3) étant conçu pour reconnaître la propriété du sol (100E) dans une zone de reconnaissance (2B) du dispositif de reconnaissance (2), et
- au moins un capteur de détection (5) d'un dispositif de détection (4), le dispositif de détection (4) étant conçu pour détecter le signal de conducteur de délimitation (SI) pour surveiller au moins le rapprochement vers le dispositif à conducteur de délimitation (50), en particulier un franchissement du dispositif à conducteur de délimitation (50),
- dans lequel le système d'entretien extérieur (90) comporte un dispositif de commande et de surveillance (91), le dispositif de commande et de surveillance (91) étant conçu pour :
- commander un déplacement du robot d'entretien extérieur (1) sur la surface du sol (100) et surveiller au moins le rapprochement vers le dispositif à conducteur de délimitation (50) par détection du signal de conducteur de délimitation (SI) pendant le déplacement, et
- en cas d'au moins un rapprochement vers le dispositif à conducteur de délimitation (50), commander le déplacement du robot d'entretien extérieur (1) en fonction de la reconnaissance du changement (100E) de telle sorte que le robot d'entretien extérieur (1) reste à l'intérieur de la bordure de délimitation (101),
- une intensité maximale (MSI) et/ou une inversion de phase (PUI) du signal de conducteur de délimitation (SI) pouvant être détectées à l'intérieur de la bordure de délimitation (101), **caractérisé en ce que** le dispositif à conducteur de délimitation (50) s'étend à l'intérieur de la bordure de délimitation (101),
- la commande du déplacement du robot d'entretien extérieur (1) étant effectuée de telle sorte qu'en cas d'au moins un rapprochement vers le dispositif à conducteur de délimitation (50) et de reconnaissance du changement (100E), le robot d'entretien extérieur (1) atteigne la section de bord (102).

14. Système d'entretien extérieur (90) selon la revendication précédente,
- dans lequel le système d'entretien extérieur (90) comprend le robot d'entretien extérieur (1) et/ou le dispositif de reconnaissance (2) et/ou le dispositif de détection (4), en particulier dans lequel le robot d'entretien extérieur (1) comprend le dispositif de reconnaissance (2) et/ou le dispositif de détection (4) et/ou le dispositif de commande et de surveillance (91).
